(19) **Europäisches Patentamt / European Patent Office / Office européen des brevets**

(11) **EP 3 431 455 A1**

(12) # DEMANDE DE BREVET EUROPEEN

(43) Date de publication:
**23.01.2019 Bulletin 2019/04**

(51) Int Cl.:
***C03C 17/34*** *(2006.01)*

(21) Numéro de dépôt: **17182370.1**

(22) Date de dépôt: **20.07.2017**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(71) Demandeur: **AGC Glass Europe**
**1348 Louvain-La-Neuve (BE)**

(72) Inventeurs:
- **TIXHON, Eric**
  **4367 Crisnée (BE)**

- **MICHEL, Eric**
  **4000 Glain (BE)**
- **ARNOULT, Grégory**
  **5380 Noville-Les-Bois (BE)**
- **MARIAGE, Fabian**
  **7532 Beclers (BE)**

(74) Mandataire: **Agustsson, Sveinn Otto**
**AGC Glass Europe S.A.**
**Rue Louis Blériot, 12**
**6041 Gosselies (BE)**

(54) **VERRE À ENTRETIEN FACILITÉ**

(57)  L'invention concerne des substrats en verre, aptes à être traités thermiquement, munis d'un revêtement hydrophile chimiquement et mécaniquement durable, ledit revêtement étant caractérisé par une rugosité faible.

Un substrat selon l'invention a peu tendance à s'encrasser et est plus facile à nettoyer. Il est également plus difficilement griffable. L'invention vise également la réalisation de tels substrats.

EP 3 431 455 A1

**Description**

**1. Domaine de l'invention**

Le domaine de l'invention est celui des substrats en verre muni d'un revêtement chimiquement et mécaniquement durable qui leur confère une certaine hydrophilie, propriété permettant de faciliter l'entretien desdits substrats.

Le verre est un matériau largement utilisé non seulement en architecture mais aussi dans l'automobile ou encore dans des applications intérieures comme les miroirs, les verres de douche, la décoration, l'électroménager... Une demande existe pour que l'industrie propose des substrats dont l'entretien est facilité de façon durable dans le temps.

**2. Solutions de l'art antérieur**

Il est connu que le dioxyde de titane, notamment sous forme anatase, lorsqu'il est soumis à une irradiation UV, présente un effet photocatalytique qui lui permet de dégrader les salissures organiques qui viennent à son contact. EP1304366A1 et WO97/10186A1 présentent largement les différentes caractéristiques de cette couche, son mode de fonctionnement ainsi que ses procédés d'obtention. A côté de ces propriétés photocatalytiques, EP1304366A1 et EP1366000A2 montrent que le dioxyde de titane, toujours sous irradiation UV, présente aussi un caractère hydrophile qui se traduit par un angle de contact avec l'eau très faible. Cette caractéristique supplémentaire permet la formation d'un film d'eau qui en s'écoulant facilite l'élimination des salissures résiduelles déposées sur le verre. En outre et comme le décrit EP882686B1, la couche de $TiO_2$ est aussi utilisée pour empêcher la formation de buée, phénomène qui peut être responsable d'une perte non négligeable de visibilité. Les effets et avantages de cet oxyde sont donc multiples et très intéressants.

Pour déposer le dioxyde de titane, plusieurs méthodes bien connues de l'art antérieur existent (WO1997010186A1, EP1304366A1). Chaque méthode présente des avantages et des inconvénients qui en détermineront le choix. Notamment, le film de $TiO_2$ peut être déposé par pyrolyse en phase gazeuse (CVD), par voie humide (sol-gel) ou encore par déposition en phase gazeuse sous vide (PVD). Le dernier procédé se fait généralement à froid et permet d'obtenir une couche de dioxyde de titane amorphe qui nécessite dès lors un recuit pour être cristallisée. Selon la température de recuit utilisée la phase cristalline obtenue sera l'anatase ou le rutile, la première étant généralement préférée pour sa meilleure activité photocatalytique. Le dépôt par sol-gel résulte généralement en une couche épaisse et plus poreuse, dont la préparation est aussi plus complexe. Enfin la pyrolyse en phase gazeuse fait intervenir des précurseurs qui sont dégradés sous l'effet de la température élevée, pour former une couche sur le verre. Ce procédé peut être effectué directement en ligne au moment de la production du verre, rendant cette voie particulièrement attractive et peu coûteuse. D'autant plus que la couche résultante est une couche plus dure, plus dense et présentant des propriétés de résistance mécanique et chimique importantes. Une telle couche peut notamment être utilisée en extérieur, sans revêtement de protection. Enfin, de par la méthode, la température de dépôt est très élevée et l'on obtient le $TiO_2$ directement avec un taux de cristallisation élevé.

Généralement, une telle couche obtenue par CVD présente une rugosité assez importante. A titre d'illustration, on trouve dans EP1497236A1 qu'un revêtement hydrophile à base de $TiO_2$ déposé par CVD a une rugosité caractérisée par un Rq de 7 à 10 nm. Cette rugosité, généralement préférée car elle contribue à une meilleure activité photocatalytique et une meilleure hydrophilie, est aussi responsable d'un encrassement plus important par incrustation de salissures dans les aspérités de la surface, ainsi que d'une certaine difficulté à désincruster ces impuretés. En plus, la rugosité, si elle est trop importante, peut rendre la couche plus sensible aux griffes, traces, tâches.... Pour l'homme du métier, une telle sensibilité est problématique lors des différentes manipulations du verre.

Ce que l'invention se propose d'améliorer, c'est précisément le problème lié à la question de la rugosité de la couche de $TiO_2$. Comment obtenir une couche de $TiO_2$ qui permette de conserver une bonne hydrophilie tout en présentant une surface faiblement rugueuse, ce qui semble antagoniste au vu de l'art antérieur ?

**3. Objectifs de l'invention**

L'invention a notamment pour objectif de pallier aux inconvénients de l'art antérieur en proposant un substrat muni d'un revêtement faisant preuve d'une bonne hydrophilie et ayant cependant une rugosité assez faible pour éviter un encrassement par incrustation et faciliter l'enlèvement des salissures. Un tel revêtement doit également être plus résistant aux griffures. En outre, le revêtement de l'invention doit être soumis à des traitements thermiques tels la trempe ou le bombage, sans que ses propriétés optiques ne soient détériorées.

Enfin, l'invention vise un procédé économique et facile à mettre en oeuvre pour déposer un revêtement présentant un fort caractère hydrophile et faisant preuve d'une bonne durabilité chimique et mécanique.

## 4. Exposé de l'invention

L'invention concerne un substrat en verre qui comprend sur une de ses faces un revêtement hydrophile.

Le substrat est préférentiellement un substrat en verre clair, extra-clair ou coloré, flotté de type silico-sodo-calcique, dont l'épaisseur est comprise entre 0,2 et 20 mm.

Selon un mode de réalisation de l'invention, ce revêtement hydrophile comprend une première couche barrière aux ions alcalins, préférentiellement déposée par CVD. En effet, lorsque le verre revêtu est soumis à un chauffage intensif, des ions alcalins peuvent migrer du verre vers la couche fonctionnelle qui s'en trouve dégradée. Cette couche barrière est à base de silicium et choisie parmi les oxydes, les nitrures, les oxynitrures, les carbures, les oxycarbures de silicium. Plus particulièrement, la première couche est une couche stoechiométrique de $SiO_2$ ou une sous-stoechiométrique d'oxyde de silicium comportant du carbone et notée $SiO_xC_y$. De manière encore plus préférée, la couche barrière aux alcalins est une couche de $SiO_xC_y$ avec un ratio atomique C/Si compris entre 0,10 et 0,60, de préférence entre 0,20 et 0,40. Cette première couche a une épaisseur comprise entre 10 et 120 nm, de préférence entre 15 et 80 nm, de manière encore plus préférée entre 20 et 50 nm. Préférentiellement cette première couche se trouve en contact direct avec le substrat.

Le revêtement hydrophile selon l'invention comprend une seconde couche, cette seconde couche ayant un caractère hydrophile est préférentiellement déposée par CVD sur la première couche et de préférence en contact direct avec celle-ci. Selon un mode de réalisation préféré cette seconde couche est la dernière couche du revêtement hydrophile.

Selon l'invention, la couche hydrophile du revêtement hydrophile est choisie parmi les oxydes de Ti, Sn, W, Zn, Si, Al, Ag, Co et les mélanges d'un ou de plusieurs de ces oxydes. L'épaisseur de cette couche hydrophile est comprise entre 5 et 150 nm, de préférence entre 8 et 50 nm et de manière encore plus préférée entre 10 et 20 nm. Selon l'invention la rugosité Rq du revêtement hydrophile est inférieure à 3 nm, de préférence inférieure à 2 nm et de manière encore plus préférée inférieure à 1 nm. Le revêtement de l'invention est caractérisé par un angle de contact à l'eau au plus égal à 10°, de préférence au plus égal à 6°, après avoir été soumis à une irradiation à 40°C pendant 30 minutes au moyen d'UVA (340 nm) d'une puissance de 40 W/m$^2$.

Selon un mode de réalisation particulièrement préféré, cette couche hydrophile est une couche de $TiO_2$, dont l'épaisseur est comprise entre 5 et 150 nm, de préférence entre 8 et 50 nm et de manière encore plus préférée entre 10 et 20 nm. La couche de $TiO_2$ est majoritairement obtenue sous forme anatase. La couche de $TiO_2$ peut être dopée, notamment avec de l'étain dans des pourcentages atomiques de Sn/Ti inférieurs à 10 %, de préférence inférieurs à 5%.

Plus particulièrement, l'invention concerne aussi la formation d'un revêtement hydrophile muni d'une première couche barrière aux ions alcalins et d'une seconde couche de $TiO_2$, dont l'épaisseur est comprise entre 5 et 150 nm, de préférence entre 8 et 50 nm et de manière encore plus préférée entre 10 et 20 nm.

Selon un mode de réalisation le revêtement hydrophile selon l'invention a été poli après le dépôt de toutes les couches, par exemple sur une ligne float, de sorte que sa rugosité diminue pour atteindre des valeurs de rugosité Rq inférieures à 3 nm, de préférence inférieures à 2 nm et de manière encore plus préférée inférieures à 1 nm.

Selon un mode de réalisation le substrat en verre revêtu a subi après polissage un traitement thermique, comme par exemple une trempe ou un bombage. Ce traitement thermique implique des températures supérieures à 600°C et un maintien du substrat à ces températures pendant des durées qui sont adaptées à l'épaisseur du substrat selon un procédé bien connu de l'homme du métier.

La couche barrière à base de silicium peut être déposée conformément aux procédés bien connus de l'homme du métier et décrits dans l'art antérieur, préférentiellement sur une ligne de fabrication du verre. Alternativement elle peut aussi être déposée par n'importe quel procédé bien connu de l'homme du métier.

Selon un mode de réalisation préféré de l'invention, la couche de $TiO_2$ est constituée par dépôt chimique en phase vapeur, préférentiellement sur une ligne de fabrication du verre, optionnellement suite à la couche barrière. Elle est obtenue par pyrolyse des précurseurs bien connus de l'homme du métier pour réaliser une telle couche. Parmi les précurseurs généralement utilisés, il y a le tetraisopropoxyde de titane ($Ti[OCH(CH_3)_2]_4$ nommé par la suite TTIP), le tétrachlorure de titane ($TiCl_4$), le tetrabutoxyde de titane ($Ti(OCH_2CH_2CH_3)_4$), l'éthoxyde de titane (IV) ($Ti(OC_2H_5)_4$) ou tout mélange de ces précurseurs. Plus particulièrement, le TTIP est pulvérisé au-dessus du verre soit dans le bain d'étain où la température du verre est comprise entre 750 et 620°C, soit au début de la galerie où le verre est à une température entre 620 et 550°C. Le revêtement comprenant la couche de $TiO_2$, est ensuite poli de façon à en diminuer la rugosité. Conformément aux connaissances de l'homme du métier, il a été montré que ce polissage a un impact négatif sur l'hydrophilie du revêtement.

Cependant, de manière très surprenante, les inventeurs ont observé que si le verre ainsi revêtu et poli est traité thermiquement, la couche de $TiO_2$ retrouve son caractère hydrophile tel que mesuré avant polissage, tout en conservant une rugosité plus faible. Cette observation est contraire à l'enseignement de l'art antérieur qui montre qu'une couche de $TiO_2$ polie et donc nettement moins rugueuse, présente une moins bonne hydrophilie. Ce comportement tout à fait surprenant permet donc d'obtenir un substrat en verre revêtu qui présente à la fois une faible rugosité et un caractère hydrophile élevé, contournant ainsi les limitations de l'art antérieur.

Les substrats en verre selon l'invention peuvent faire partie d'un vitrage simple ou multiple, il peut être utilisé pour l'automobile ou dans les applications intérieures. La surface revêtue du vitrage est une surface extérieure.

Pour plus de clarté dans l'ensemble de ce document, nous adoptons les conventions suivantes :

- Les tests ont été réalisés sur des substrats en verre sodo-calcique dont l'épaisseur est de 4 mm.

- Par angle de contact (AC), nous entendons l'angle que fait la tangente à une goutte d'eau avec la surface du substrat. Selon les cas, l'angle de contact a été mesuré avec ou sans activation préalable par rayonnement UV. Cette activation du caractère hydrophile par irradiation UV est réalisée à 40°C pendant une période de 30 minutes au moyen d'UVA d'une puissance de 40 W/m2 (UVA-340 nm 40 W/m$^2$, issu d'un appareil Q-Panel, de la compagnie Q-Lab, Cleveland, Ohio).

- La rugosité Rq est la moyenne quadratique des écarts de hauteur z sur la surface d'évaluation et mesurés par rapport à la hauteur moyenne z. La moyenne quadratique des écarts d'un profil est évaluée par microscope à force atomique (AFM) sur une surface de 10 $\mu$m fois 10 $\mu$m en N = 512 lignes de M = 512 points de mesure selon la formule suivante :

$$R_q = \sqrt{\frac{1}{MN} \sum_{x=1}^{N} \sum_{y=1}^{M} \left(z(x,y) - \bar{z}(N,M)\right)^2} \ .$$

Les mesures ont été réalisées en mode contact intermittent (tapping mode) avec une sonde de type Bruker NCHV, en Silicium dopé à l'antimoine, de raideur k entre 20 et 80 N/m, avec une fréquence de résonance entre 334 et 401 kHz et dont le rayon nominal de la pointe est de 10 nm.

- Les épaisseurs des couches renseignées ont été déterminées par fluorescence aux rayons X (XRF) sur base d'une courbe d'étalonnage. Ce sont des épaisseurs géométriques ou physiques.

- la mesure des variations colorimétriques de la lumière transmise ou réfléchie est effectuée à partir des coordonnées du système CIELAB (illuminant D65) conformément à la norme EN410. La variation colorimétrique est exprimée par l'expression notée $\Delta E^*$, expression correspondant à la formule :

$$\Delta E^* = \left(\Delta L^{*2} + \Delta a^{*2} + \Delta b^{*2}\right)^{1/2}$$

où $\Delta L^*$ représente la différence entre les coordonnées colorimétriques L* du vitrage avant et après traitement thermique,

$\Delta a^*$ représente la différence entre les coordonnées colorimétriques a* du vitrage avant et après traitement thermique,

$\Delta b^*$ représente la différence entre les coordonnées colorimétriques b* du vitrage avant et après traitement thermique,

Plus particulièrement, et de préférence, le vitrage selon l'invention présente une variation colorimétrique en transmission, $\Delta E^*_{\tau\iota}$:

$AE^*_{TL} = (\Delta L^*TL2 + \Delta a^*_{TL}{}^2 + \Delta b^*_{TL}{}^2)^{1/2}$ est inférieure à 3, préférentiellement inférieure à 2, plus préférentiellement inférieure à 1, lorsque ledit vitrage est soumis à une température d'au moins 630°C et d'au plus 670°C pendant 3 à 10 minutes.

De préférence le vitrage selon l'invention présente de manière additionnelle, une variation colorimétrique en réflexion, côté revêtement, $\Delta E^*_{RC}$, telle que :

$\Delta E^*_{Rc} = (\Delta L^*_{Rc}{}^2 + \Delta a^*_{Rc}{}^2 + \Delta b^*_{Rc}{}^2)^{1/2}$ est inférieure 3, préférentiellement inférieure à 2, lorsque ledit vitrage est soumis à une température d'au moins 630°C et d'au plus 670°C pendant 3 à 10 minutes.

**5. Description de modes de réalisation préférés de l'invention**

L'invention est illustrée par les exemples qui suivent, lesquels ne limitent en rien la portée de l'invention. Le tableau 1 renseigne les paramètres utilisés dans les exemples pour produire des échantillons de verre revêtu selon l'invention.

Dans ces exemples la première couche, barrière à la migration d'ions alcalins du verre, et la seconde couche, hydrophile, sont obtenues par dépôt chimique en phase vapeur directement sur une ligne de production de verre sodo-calcique clair, avançant à une vitesse de 15 m/min et dont l'épaisseur est de 4 mm.

Les exemples 1 et 2 selon l'invention ont subi une étape de polissage. Les contre-exemples 3 et 4 n'ont pas subi de polissage.

Tableau 1 : paramètres d'injection de gaz

| exemples | $SiO_xC_y$ | | | | $TiO_2$ | | Polissage |
|---|---|---|---|---|---|---|---|
| | $N_2$ | $C_2H_4$ | $SiH_4$ | $CO_2$ | TTIP | $N_2$ | |
| | (kg/h) | (kg/h) | (kg/h) | (kg/h) | (l/h) | ($Nm^3/h$) | |
| 1 | 0,80 | 4,40 | 0,57 | 8,80 | 2,0 | 850 | Oui |
| 2 | 0,80 | 4,40 | 0,57 | 8,80 | 2,5 | 850 | Oui |
| 3 | 0,80 | 4,40 | 0,57 | 8,80 | 2,5 | 850 | Non |
| 4 | 0,80 | 4,40 | 0,25 | 8,80 | 2,5 | 850 | Non |

Un premier dispositif de revêtement situé au-dessus du bain d'étain, dans une zone où la température du verre est d'environ 745°C, permet par injection de silane ($SiH_4$), de l'azote ($N_2$), du dioxyde de carbone ($CO_2$) et de l'éthylène ($C_2H_4$), d'obtenir une couche de $SiO_xC_y$ (avec un ratio atomique C/Si compris entre 0,13 et 0,33) et dont l'épaisseur est comprise entre 10 et 30 nm.

Le dépôt de dioxyde de titane est obtenu par injection de TTIP et d'azote via un second dispositif de revêtement au-dessus du verre à l'entrée de la galerie où le verre est à une température d'environ 600°C. La couche de dioxyde de titane ainsi obtenue est principalement sous forme anatase.

Après ces dépôts, pour les exemples 1 et 2, un polissage du revêtement a été effectué. Le tableau 2 suivant reprend les caractéristiques principales des exemples 1 à 4 décrits dans le tableau 1 ci-dessus. Le tableau 2 montre clairement l'impact du polissage sur la rugosité. La rugosité finale présente une valeur de Rq qui est comprise entre 1 et 2 nm dans le cas des exemples 1 et 2 qui ont été polis et qui est supérieure à 4 sur les exemples 3 et 4 non polis.

Tableau 2: caractérisation des produits obtenus dans les conditions décrites au tableau 1

| exemples | épaisseur $SiO_x$ (XPS) | rapport C / Si | épaisseur $TiO_2$ (XRF) | P (poli) / NP (non poli) | $R_q$ (nm) |
|---|---|---|---|---|---|
| 1 | 30 nm | 0,30 | 11 nm | P | 1,6 |
| 2 | 27 nm | 0,33 | 14 nm | P | 1,7 |
| 3 | 28 nm | 0,32 | 16 nm | NP | 4,1 |
| 4 | 13 nm | 0,13 | 16 nm | NP | 4,8 |

Les exemples 1 à 4 obtenus ont ensuite été soumis à un traitement thermique intense (670°C pendant 200 s) et un ensemble d'analyses ont été effectuées afin de contrôler leur stabilité optique au dit traitement thermique.

Les tableaux 3 et 4 montrent, que conformément à l'objectif de l'invention, les paramètres optiques mesurés avant et après trempes, sont conservés. En effet, les exemples 1 et 2 de verre revêtu selon l'invention présentent en transmission lumineuse et en réflexion côté couche des paramètres optiques très satisfaisants. Il ressort notamment qu'après traitement thermique, la transmission lumineuse reste élevée et la réflexion lumineuse côté couche est inférieure à 15%. La teinte du substrat revêtu en transmission et en réflexion reste agréable et correspond à la demande du marché. Le traitement thermique n'a pratiquement pas modifié les paramètres optiques.

Tableau 3 : paramètres colorimétriques en transmission lumineuse avant et après traitement thermique.

| exemples | avant trempe | | | après trempe | | | $\Delta a^*$ | $\Delta b^*$ | $\Delta E_{TL}$ |
|---|---|---|---|---|---|---|---|---|---|
| | Tv | a* | b* | Tv | a* | b* | | | |
| 1 | 86 | -0,61 | 1,92 | 86 | -0,61 | 2,10 | 0 | -0,18 | 0,2 |
| 2 | 84 | -0,55 | 2,98 | 84 | -0,55 | 3,08 | 0 | -0,1 | 0,2 |
| 3 | 84 | -0,54 | 3,1 | 84 | -0,53 | 3,22 | -0,01 | -0,12 | 0,1 |
| 4 | 85 | -0,6 | 3,15 | 83 | -0,54 | 3,21 | -0,06 | -0,06 | 0,6 |

Tableau 4 : paramètres colorimétriques en réflexion côté couche avant et après traitement thermique.

| Exemples | avant trempe | | | après trempe | | | $\Delta a^*$ | $\Delta b^*$ | $\Delta E_{Rc}$ |
|---|---|---|---|---|---|---|---|---|---|
| | Rc | a* | b* | Rc | a* | b* | | | |
| 1 | 11 | -0,3 | -6,41 | 11 | -0,19 | -6,62 | -0,11 | 0,21 | 0,7 |
| 2 | 14 | -0,4 | -8,64 | 13 | -0,33 | -8,69 | -0,07 | 0,05 | 0,7 |
| 3 | 14 | -0,39 | -8,94 | 14 | -0,34 | -8,91 | -0,05 | -0,03 | 0,7 |
| 4 | 13 | -0,2 | -9,53 | 14 | -0,21 | -9,27 | 0,01 | -0,26 | 0,4 |

Enfin, le tableau 5 renseigne les valeurs mesurées de l'angle de contact avec l'eau pour les différents échantillons, polis ou non polis, avant et après trempe selon que l'échantillon ait été ou non activé par irradiation UV. En ce qui concerne l'activation UV du caractère hydrophile, l'irradiation UV est réalisée à 40°C pendant une période de 30 minutes au moyen d'UVA d'une puissance de 40 W/m$^2$ (UVA-340 nm, 40 W/m$^2$, issu d'un appareil Q-Panel, de la compagnie Q-Lab, Cleveland, Ohio).

Tableau 5 : mesure de l'angle de contact

| exemples | Angles de contact | | | |
|---|---|---|---|---|
| | avant trempe | | après trempe | |
| | au départ | 30 min UV | au départ | 30 min UV |
| 1 | 37° | 21° | 31° | 5° |
| 2 | 36° | 18° | 43° | 4° |
| 3 | 38° | 6° | 35° | 4° |
| 4 | 34° | 6° | 35° | 5° |

Conformément à ce qui est décrit dans l'art antérieur, le tableau 5 confirme que lorsque la couche de TiO$_2$ est polie, et par conséquent moins rugueuse, l'hydrophilie d'une manière générale est moins bonne. En effet, l'angle de contact à l'eau après une irradiation UV de 30 minutes est compris entre 18° et 21° alors que la même irradiation sur un échantillon non poli permet d'atteindre un angle de contact de l'ordre de 6°.

Par contre, lorsque l'on compare l'angle de contact avec l'eau d'un revêtement poli et traité thermiquement, à la grande surprise de l'inventeur, la couche de dioxyde de titane se comporte de la même façon qu'une couche de TiO$_2$ non polie. En effet, on peut clairement voir que la couche de TiO$_2$ polie et traitée thermiquement, lorsqu'elle est irradiée pendant 30 minutes présente un angle de contact de 5°. Cette observation montre, contre toute attente, qu'une couche de dioxyde de titane polie peut récupérer des valeurs très satisfaisantes d'hydrophilie, après traitement thermique.

En même temps la surface présente une rugosité très faible, ce qui ralentit l'encrassement et permet un nettoyage plus facile. Le tableau 6 renseigne les mesures de rugosité effectuées sur un échantillon poli et trempé et sur un échantillon non poli et trempé. Les mesures confirment que la rugosité d'un échantillon après trempe reste plus inférieure. Le produit de l'invention, à la fois lisse et hydrophile, ce qui le rend peu enclin à s'encrasser, facile à nettoyer et moins griffable.

Tableau 6 mesure de rugosité après trempe

| exemples | $R_q$ avant trempe | $R_q$ après trempe |
|---|---|---|
| 2 | 1,7 | 1,9 |
| 3 | 4,1 | 4,1 |

Les produits obtenus conformément à l'invention ont été soumis au test normé EN 1096-5 qui évalue les propriétés d'hydrophilie et d'auto-nettoyage. Le test de cette norme est une mesure du voile sur plusieurs échantillons soumis à une simulation de conditions climatiques. Le critère d'évaluation est que la variation du voile avant et après le test (∆H) doit être inférieur à 1 %.

Les résultats décrits dans le tableau 7 sont en accord avec les observations de l'invention. En effet, il apparaît clairement que si le verre non poli et donc rugueux, passe le test avant et après traitement thermique, le produit de l'invention c'est-à-dire poli et donc moins rugueux, passe le test de la norme seulement après traitement thermique. Ce dernier test confirme donc bien que de manière très surprenante, un verre revêtu selon l'invention, a non seulement une faible rugosité mais qu'il possède en outre les propriétés d'un verre autonettoyant hydrophile.

Tableau 7. variation du voile (∆H en %) après exposition à des conditions climatiques simulées selon EN 1096-5.

|  | Essai 1 (poli) | Essai 2 (non poli) | Verre clair (référence) |
|---|---|---|---|
| Avant traitement thermique | 1,2 | 0,6 | 2,9 |
| Après traitement thermique | 0,7 | 0,6 | 4,7 |

## Revendications

1. Substrat en verre muni d'un revêtement hydrophile traité thermiquement comprenant dans l'ordre depuis le verre :

    - une couche barrière aux ions alcalins optionnelle, et
    - une couche hydrophile choisie parmi les oxydes de Ti, Sn, W, Zn, Si, Al, Ag et Co ou le mélange d'un ou plusieurs de ces oxydes, et ayant une épaisseur Comprise entre 5 et 150 nm,

    ledit revêtement hydrophile présentant une rugosité Rq inférieure à 3 nm et un angle de contact à l'eau au plus égal à 10° après une irradiation à 40°C pendant 30 minutes au moyen d'UVA (340 nm) d'une puissance de 40 W/m$^2$.

2. Substrat selon la revendication 1 **caractérisé en ce que** la couche hydrophile est du dioxyde de titane.

3. Substrat selon la revendication 2 **caractérisé en ce que** la couche de dioxyde de titane a une épaisseur comprise 8 et 50 nm, de préférence entre 10 et 20 nm.

4. Substrat selon une des revendications précédentes **caractérisé en ce que** le revêtement a une rugosité Rq inférieure à 2 nm, de préférence inférieure à 1 nm.

5. Substrat selon une des revendications précédentes **caractérisé en ce que** le revêtement présente un angle de contact à l'eau au plus égal à 6° après une irradiation de 30 minutes au moyen d'UVA d'une puissance de 40 W/m2.

6. Substrat selon l'une des revendications 2 à 5 **caractérisé en ce que** la couche de dioxyde de titane est cristallisée majoritairement sous forme anatase.

7. Substrat selon l'une des revendications 2 à 6 **caractérisé en ce que** la couche de dioxyde de titane est dopée avec de l'étain.

8. Substrat selon la revendication 7 **caractérisé en ce que** le pourcentage atomique Sn/Ti est inférieur à 10%, de préférence inférieur à 5%.

9. Substrat selon l'une des revendications 2 à 8 **caractérisé en ce que** la couche de dioxyde de titane est déposée sur une première couche barrière aux ions alcalins.

**10.** Substrat selon une des revendications précédentes **caractérisé en ce que** la couche barrière aux alcalins est une couche à base de silicium et choisie parmi les oxydes, les nitrures, les oxynitrures, les carbures, les oxycarbures de silicium

**11.** Substrat selon la revendication 10 **caractérisé en ce que** la couche barrière aux ions alcalins est une couche stoechiométrique ou sous stoechiométrique d'oxyde de silicium.

**12.** Substrat selon la revendication 10 **caractérisé en ce que** la première couche barrière aux ions alcalins est une couche de $SiO_xC_y$ avec un ratio atomique C/Si compris entre 0,10 et 0,60, de préférence entre 0,20 et 0,40.

**13.** Substrat selon la revendication 12 **caractérisé en ce que** la couche $SiO_xC_y$ a une épaisseur géométrique comprise entre 10 et 120 nm, de préférence entre 15 et 80 nm, de manière encore plus préférée entre 20 et 50 nm.

**14.** Substrat selon une des revendications précédentes **caractérisé en ce que** la réflexion lumineuse mesurée du côté du revêtement est inférieure à 20%, de préférence inférieure à 15%.

**15.** Procédé d'obtention du verre revêtu décrit à l'une des revendication 1 à 14 comprenant le dépôt d'une couche de dioxyde de titane, le polissage de la dite couche de dioxyde de titane, et un traitement thermique du verre revêtu à une température supérieure à 600°C.

Europäisches
Patentamt

European
Patent Office

Office européen
des brevets

## RAPPORT DE RECHERCHE EUROPEENNE

Numéro de la demande

EP 17 18 2370

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 2 979 910 A1 (SAINT GOBAIN [FR]) 15 mars 2013 (2013-03-15) | 1-6, 9-11,13, 14 | INV. C03C17/34 |
| Y | * revendications 1-12; figure 1; exemples * | 7,8,12 | |
| | ----- | | |
| X | FR 2 971 519 A1 (SAINT GOBAIN [FR]) 17 août 2012 (2012-08-17) | 1-6, 9-11,14 | |
| Y | * page 4, ligne 3 - page 9, ligne 29; revendications 1-14; exemples; tableau 1 * | 7,8,12 | |
| | ----- | | |
| X | US 2002/155299 A1 (HARRIS CAROLINE S [US] ET AL) 24 octobre 2002 (2002-10-24) | 1-6,9 | |
| Y | * alinéas [0013], [0028], [0031] - [0037], [0052]; revendications 1-53; exemples * | 7,8 | |
| | ----- | | |
| X | EP 1 842 835 A2 (CARDINAL CG CO [US]) 10 octobre 2007 (2007-10-10) | 1-5,9-11 | |
| Y | * alinéas [0086], [0090], [0112], [0237]; revendications 1-43; tableaux 4-6 * | 7,8,15 | DOMAINES TECHNIQUES RECHERCHES (IPC) |
| | ----- | | C03C |
| Y | US 6 013 372 A (HAYAKAWA MAKOTO [JP] ET AL) 11 janvier 2000 (2000-01-11) * colonne 12, lignes 38-67 * | 7,8 | |
| | ----- | | |
| Y | EP 0 518 755 A1 (SAINT GOBAIN VITRAGE [FR]) 16 décembre 1992 (1992-12-16) * exemples 1-7 * | 12 | |
| | ----- | | |
| Y | WO 2014/198543 A1 (AGC GLASS EUROPE [BE]) 18 décembre 2014 (2014-12-18) * page 10, lignes 18-24 * | 15 | |
| | ----- | | |
| A,D | WO 03/087005 A1 (SAINT GOBAIN [FR]; AZZOPARDI MARIE-JOSE [FR]) 23 octobre 2003 (2003-10-23) * revendications 1-26; exemple 1 * | 1-15 | |
| | ----- | | |

Le présent rapport a été établi pour toutes les revendications

| Lieu de la recherche | Date d'achèvement de la recherche | Examinateur |
|---|---|---|
| Munich | 29 mars 2018 | Wrba, Jürgen |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 17 18 2370

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-03-2018

| Document brevet cité au rapport de recherche | | Date de publication | Membre(s) de la famille de brevet(s) | | Date de publication |
|---|---|---|---|---|---|
| FR 2979910 | A1 | 15-03-2013 | CN | 103781738 A | 07-05-2014 |
| | | | EP | 2755927 A1 | 23-07-2014 |
| | | | FR | 2979910 A1 | 15-03-2013 |
| | | | JP | 2014534143 A | 18-12-2014 |
| | | | KR | 20140063682 A | 27-05-2014 |
| | | | US | 2014338749 A1 | 20-11-2014 |
| | | | WO | 2013038104 A1 | 21-03-2013 |
| FR 2971519 | A1 | 17-08-2012 | CN | 103370441 A | 23-10-2013 |
| | | | EP | 2675938 A1 | 25-12-2013 |
| | | | FR | 2971519 A1 | 17-08-2012 |
| | | | WO | 2012110746 A1 | 23-08-2012 |
| US 2002155299 | A1 | 24-10-2002 | AR | 032859 A1 | 26-11-2003 |
| | | | AU | 2002316028 B2 | 21-04-2005 |
| | | | CA | 2434560 A1 | 31-10-2002 |
| | | | CN | 1501895 A | 02-06-2004 |
| | | | EP | 1366000 A2 | 03-12-2003 |
| | | | JP | 6247141 B2 | 13-12-2017 |
| | | | JP | 2005500230 A | 06-01-2005 |
| | | | JP | 2014133700 A | 24-07-2014 |
| | | | KR | 20030082943 A | 23-10-2003 |
| | | | MX | PA03007287 A | 04-12-2003 |
| | | | US | 2002155299 A1 | 24-10-2002 |
| | | | US | 2007218265 A1 | 20-09-2007 |
| | | | WO | 02085809 A2 | 31-10-2002 |
| EP 1842835 | A2 | 10-10-2007 | AUCUN | | |
| US 6013372 | A | 11-01-2000 | AT | 279490 T | 15-10-2004 |
| | | | AT | 326513 T | 15-06-2006 |
| | | | AU | 718733 B2 | 20-04-2000 |
| | | | BR | 9607868 A | 30-06-1998 |
| | | | CA | 2215925 A1 | 26-09-1996 |
| | | | CN | 1184498 A | 10-06-1998 |
| | | | DE | 19681289 T1 | 16-04-1998 |
| | | | DK | 0816466 T3 | 12-06-2006 |
| | | | DK | 1304366 T3 | 14-02-2005 |
| | | | EP | 0816466 A1 | 07-01-1998 |
| | | | EP | 1304366 A1 | 23-04-2003 |
| | | | EP | 1712530 A2 | 18-10-2006 |
| | | | EP | 1712531 A2 | 18-10-2006 |
| | | | ES | 2229049 T3 | 16-04-2005 |
| | | | ES | 2265150 T3 | 01-02-2007 |
| | | | ES | 2538807 T3 | 24-06-2015 |
| | | | HK | 1009829 A1 | 09-07-2004 |

Pour tout renseignement concernant cette annexe : voir Journal Officiel de l'Office européen des brevets, No.12/82

page 1 de 3

EPO FORM P0460

**ANNEXE AU RAPPORT DE RECHERCHE EUROPEENNE
RELATIF A LA DEMANDE DE BREVET EUROPEEN NO.**

EP 17 18 2370

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-03-2018

| Document brevet cité au rapport de recherche | Date de publication | Membre(s) de la famille de brevet(s) | Date de publication |
|---|---|---|---|
| | | JP 2756474 B2 | 25-05-1998 |
| | | JP 2924902 B2 | 26-07-1999 |
| | | JP 2943768 B2 | 30-08-1999 |
| | | JP 3334709 B2 | 15-10-2002 |
| | | JP 3334710 B2 | 15-10-2002 |
| | | JP 3709931 B2 | 26-10-2005 |
| | | JP 3786364 B2 | 14-06-2006 |
| | | JP 3786365 B2 | 14-06-2006 |
| | | JP 3786366 B2 | 14-06-2006 |
| | | JP H1170613 A | 16-03-1999 |
| | | JP H10146251 A | 02-06-1998 |
| | | JP H10156999 A | 16-06-1998 |
| | | JP H11153701 A | 08-06-1999 |
| | | JP 2000075114 A | 14-03-2000 |
| | | JP 2001026070 A | 30-01-2001 |
| | | JP 2001150586 A | 05-06-2001 |
| | | JP 2001152051 A | 05-06-2001 |
| | | JP 2002355917 A | 10-12-2002 |
| | | JP 2003291243 A | 14-10-2003 |
| | | JP 2004086170 A | 18-03-2004 |
| | | JP 2004089987 A | 25-03-2004 |
| | | JP 2004124058 A | 22-04-2004 |
| | | JP 2005325351 A | 24-11-2005 |
| | | JP 2009167097 A | 30-07-2009 |
| | | PT 816466 E | 31-08-2006 |
| | | PT 1304366 E | 31-01-2005 |
| | | US 6013372 A | 11-01-2000 |
| | | WO 9629375 A1 | 26-09-1996 |
| EP 0518755 A1 | 16-12-1992 | CA 2071147 A1 | 15-12-1992 |
| | | DE 69228573 D1 | 15-04-1999 |
| | | DE 69228573 T2 | 11-11-1999 |
| | | EP 0518755 A1 | 16-12-1992 |
| | | ES 2131522 T3 | 01-08-1999 |
| | | FR 2677639 A1 | 18-12-1992 |
| | | JP 3280069 B2 | 30-04-2002 |
| | | JP H05208849 A | 20-08-1993 |
| | | US 5304394 A | 19-04-1994 |
| WO 2014198543 A1 | 18-12-2014 | EP 3008025 A1 | 20-04-2016 |
| | | WO 2014198543 A1 | 18-12-2014 |
| WO 03087005 A1 | 23-10-2003 | AU 2003262138 A1 | 27-10-2003 |
| | | BR 0309272 A | 22-02-2005 |
| | | CA 2482112 A1 | 23-10-2003 |
| | | CN 1662467 A | 31-08-2005 |

EPO FORM P0460

Pour tout renseignement concernant cette annexe : voir Journal Officiel de l'Office européen des brevets, No.12/82

page 2 de 3

# EP 3 431 455 A1

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-03-2018

| Document brevet cité<br>au rapport de recherche | Date de<br>publication | Membre(s) de la<br>famille de brevet(s) | Date de<br>publication |
|---|---|---|---|
| | | EP 1497236 A1 | 19-01-2005 |
| | | FR 2838735 A1 | 24-10-2003 |
| | | JP 2005528313 A | 22-09-2005 |
| | | KR 20040103963 A | 09-12-2004 |
| | | MX PA04010165 A | 03-02-2005 |
| | | US 2005221098 A1 | 06-10-2005 |
| | | WO 03087005 A1 | 23-10-2003 |

Pour tout renseignement concernant cette annexe : voir Journal Officiel de l'Office européen des brevets, No.12/82

page 3 de 3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1304366 A1
- WO 9710186 A1
- EP 1366000 A2
- EP 882686 B1
- WO 1997010186 A1
- EP 1497236 A1